# EUROPÄISCHE PATENTANMELDUNG

(11) **EP 0 937 539 A1**
(43) Veröffentlichungstag der Anmeldung: **25.08.1999**
(21) Anmeldenummer: 98810148.1
(22) Anmeldetag: 24.02.1998
(51) Int. Cl.: B23Q 39/04, B23B 39/20

(54) **Rundtaktmaschine**

(71) Anmelder: Mikron SA Agno, 6903 Lugano 3 (CH)
(72) Erfinder: Baldini, Guido, 6916 Grancia (CH); Treib, Thomas, 6914 Carona (CH)
(74) Vertreter: Roshardt, Werner Alfred, Dipl.-Phys.

(57) **Zusammenfassung**

Eine Rundtaktmaschine (10) weist ein ortsfestes Maschinengestell auf, an welchem eine Bearbeitungseinheit angeordnet ist und das wenigstens eine Stütze (70) umfasst. Die Rundtaktmaschine (10) weist weiter einen bezüglich des Maschinengestells um eine vertikale Schaltachse (12) drehbaren Rundtisch (40) auf. Zur Schaffung von Freiraum für die Bearbeitung eines auf dem Rundtisch (40) anzuordnenden Werkstückes mit der Bearbeitungseinheit (66) weist die Stütze (70) einen sich im wesentlichen vertikal erstreckenden Abschnitt mit keilförmigem Querschnitt derart auf, dass die Keilspitze in radialer Richtung gegen die Schaltachse (12) hin gerichtet ist.

Das Maschinengestell zeichnet sich durch eine hohe Steifigkeit und Stabilität aus, wobei gleichzeitig im Bereich des Rundtisches (40) ein grosser Freiraum für die Bearbeitung von Werkstücken geschaffen wird und für die Einstellung bzw. Einrichtung der Maschine eine gute Zugänglichkeit zu den Satelliten (50), den Indexiervorrichtungen und zum Rundtisch (40) gewährleistet wird. Weiter weist die erfindungsgemässe Rundtaktmaschine (10) einen äusserst schnellen und hochdynamischen Antrieb für den Rundtisch (40) auf und erlaubt eine zeitsparende und trotzdem genaue Indexierung der Satelliten.

## Beschreibung

### Technisches Gebiet

Die vorliegende Erfindung betrifft eine Rundtaktmaschine mit mehreren Bearbeitungsstationen und mehreren auf einem drehbaren Rundtisch angeordneten Werkstückaufnahmevorrichtungen.

### Stand der Technik

Unter einer Rundtaktmaschine (auch Rundtransfer- oder Rundtischmaschine genannt) wird eine Werkzeugmaschine verstanden, bei der auf einem um eine vertikale Schaltachse drehbaren Rundtisch (auch Teller genannt) mehrere Werkstückaufnahmevorrichtungen (im folgenden Satelliten genannt) satellitenartig angeordnet sind. Jeder Satellit ist mit mindestens einer Spannvorrichtung zum Aufspannen eines Werkstückes versehen. Dem Umfang des Rundtisches entlang sind mehrere ortsfeste Bearbeitungsstationen zur Bearbeitung der auf den Satelliten getragenen Werkstücke vorgesehen. Zur Mehrfachbearbeitung der Werkstücke wird der Rundtisch schrittweise von einer Arbeitsposition zur nächsten gedreht bzw. geschaltet. Durch das schrittweise Drehen des Rundtsiches werden die auf dem Rundtisch angeordneten Satelliten jeweils von einer Arbeitsposition zur nächsten weiterbewegt (bzw. geschaltet), wo die Werkstücke jeweils mit einer oder mehreren ortsfesten Bearbeitungseinheiten bearbeitet werden. Dadurch wird in einer einzigen Aufspannung eine Mehrtachbearbeitung der Werkstücke mittels einer Vielzahl von Bearbeitungseinheiten ermöglicht.

Gemäss DE-C2-39 41 480 ist eine Rundtaktmaschine mit einem im wesentlichen käfigartigen, einteiligen steifen Maschinengestell bekannt, in dessen Wandteile die Bearbeitungseinheiten an den verschiedenen Bearbeitungsstationen gelagert sind. Um eine möglichst präzise Positionierung der auf dem Rundtisch angeordneten, zu bearbeitenden Werkstücke bezüglich den an den Bearbeitungseinheiten angebrachten Werkzeugen zu erreichen, muss das Maschinengestell möglichst steif sein. Die Anforderungen an die Steifheit des Maschinengestells sind insbesondere dann besonders hoch, wenn an einer einzigen Bearbeitungsstation mehrere Bearbeitungseinheiten angeordnet sind, da das Gestell dann bei gleichzeitiger Bearbeitung mit den verschiedenen Bearbeitungseinheiten die Summe der auftretenden Reaktions- und Beschleunigungskräfte möglichst verwindungsfrei und starr aufnehmen muss, damit die Bearbeitungstoleranzen eingehalten werden können. Um das Erfordernis nach grosser Steifheit erfüllen zu können sind die Maschinengestellteile von bekannten Rundtaktmaschinen einerseits äusserst massiv und entsprechend voluminös konstruiert und andrerseits möglichst nahe bei dem zu bearbeitenden Werkstück, d.h. beim Rundtisch, angeordnet.

Aufgrund der Anordnung von massiven, sperrigen Gestellteilen wie Stützen, Streben etc. in der Nähe des Rundtisches nehmen die herkömmlichen Maschinengestelle von Rundtaktmaschinen einen beträchtlichen Teil des Raumes ein, der eigentlich für die Bearbeitung der Werkstücke benötigt würde. Dieses Problem tritt wiederum in besonderem Masse bei Rundtaktmaschinen mit mehreren Bearbeitungseinheiten an einer einzigen Bearbeitungsstation auf, da zusätzlich u.a. elektrische und hydraulische Leitungen zu jeder der Bearbeitungseinheiten weiteren Raum belegen, der dann für die eigentliche Werkstückbearbeitung nicht mehr zur Verfügung steht. Die gegensätzlichen Anforderungen, einerseits ein Maschinengestell mit grosser Steifheit zu schaffen, um bei der Werkstückbearbeitung enge Toleranzen einhalten zu können, und andrerseits im Zentrum der Rundtaktmaschine im Bereich des Rundtisches für die Bearbeitung auch von komplizierten Werkstücken genügend Freiraum zu schaffen, werden bei herkömmlichen Rundtaktmaschinen nicht in befriedigender Weise erfüllt.

### Darstellung der Erfindung

Aufgabe der vorliegenden Erfindung ist die Bereitstellung einer Rundtaktmaschine mit einem steifen Maschinengestell, die im Bereich des Rundtisches einen grossen Freiraum für die Bearbeitung von Werkstücken zur Verfügung stellt.

Die Lösung der Aufgabe ist Gegenstand der unabhängigen Patentansprüche.

Die Rundtaktmaschine gemäss der Erfindung weist ein ortsfestes Maschinengestell auf, an welchem mindestens eine Bearbeitungseinheit angeordnet ist und das. wenigstens eine Stütze umfasst. Die erfindungsgemässe Rundtaktmaschine umfasst weiter einen bezüglich des Maschinengestells um eine vertikale Schaltachse drehbaren Rundtisch. Zur Schaffung von Freiraum für die Bearbeitung eines auf dem Rundtisch anzuordnenden Werkstückes mit der Bearbeitungseinheit weist die Stütze einen sich im wesentlichen vertikal erstreckenden Abschnitt mit keilförmigem Querschnitt derart auf, dass die Keilspitze in radialer Richtung gegen die Schaltachse hin gerichtet ist.

Dadurch, dass die Stütze keilförmig ausgebildet ist und derart angeordnet ist, dass die Keilspitze in radialer Richtung gegen die Schaltachse hin gerichtet ist, wird freier Raum für die Werkstückbearbeitung dort geschaffen, wo er auch benötigt wird, nämlich im Zentrum der Rundtaktmaschine, in der Umgebung der Schaltachse. Weil die Dicke der Stütze radial nach aussen hin zunimmt, wird dennoch eine ausreichende Steifigkeit und Stabilität der Stütze gewährleistet.

Durch die schmale Ausbildung der Stützen an ihrem radial inneren Rand wird zusätzlich die Zugänglichkeit zum zentralen Teil der Rundtaktmaschine, insbesondere zum Rundtisch, den Satelliten und den Indexiervorrichtungen verbessert. Dies erweist sich besonders bei der Einstellung bzw Einrichtung der Rundtaktmaschine für die Bearbeitung eines neuen Loses von Werkstücken als vorteilhaft, insbesondere bei kleinen Losgrössen.

Bei einer bevorzugten Ausführungsart der Erfindung ist die Stütze derart ausgebildet, dass die Keilspitze einen spitzen Winkel von weniger als 90 Grad einschliesst. Vorzugsweise ist der von der Keilspitze eingeschlossene Winkel sogar kleiner als 45 Grad, wobei ein Winkel von ungefähr 30 Grad besonders bevorzugt wird.

Bei der erfindungsgemässen Rundtaktmaschine ist die Bearbeitungseinheit bevorzugterweise am sich im wesentlichen vertikal erstreckenden Stützenabschnitt mit keilförmigem Querschnitt angeordnet. Die Bearbeitungseinheit kann jedoch auch an anderen Stellen des Maschinengestells angeordnet sein.

Die Stütze gemäss einer bevorzugten Ausführungsform der Erfindung weist am unteren Ende des sich vertikal erstreckenden Abschnittes einen unteren Stützenabschnitt zur Befestigung der Stütze an einem ortsfesten Sockel der Maschine und/oder an einer ortsfesten Basiseinheit der Maschine auf, wobei der untere Stützenabschnitt bezüglich des sich vertikal erstreckenden Stützenabschnittes in Richtung der Schaltachse der Rundtaktmaschine hin abgewinkelt ist, so dass die Stütze insgesamt eine im wesentlichen L-förmige Gestalt hat. Vorzugsweise weist die Stütze am oberen Ende des sich vertikal erstreckenden Abschnittes einen oberen Stützenabschnitt aufweist, der zur Verbindung mit den anderen Stützen der Rundtaktmaschine ausgebildet ist und der wiederum bezüglich des sich vertikal erstreckenden Stützenabschnittes in Richtung der Schaltachse der Rundtaktmaschine hin abgewinkelt ist, so dass die Stütze insgesamt eine im wesentlichen C-förmige Gestalt hat.

Die erfindungsgemässe Rundtaktmaschine kann weiter eine ringförmige Verbindungseinrichtung umfassen, welche mit dem oberen Stützenabschnitt von jeder der Stützen fest verbunden ist, um die Stabilität und die Steifigkeit des aus den Stützen gebildeten Gestells zu erhöhen.

Gemäss einer weiteren bevorzugten Ausführungsform der Erfindung umfasst die Rundtaktmaschine eine ortsfesten Basiseinheit und einem bezüglich der Basiseinheit um eine vertikale Schaltachse drehbaren Rundtisch, auf welchem ein mit mindestens einer Spannvorrichtung zum Aufspannen eines Werkstückes versehener Satellit um eine vertikale Satellitendrehachse bezüglich des Rundtisches drehbar angeordnet ist. Am Rundtisch ist weiter eine Satellitenantriebsvorrichtung angeordnet, die sich mit dem Rundtisch mit bewegt und ein Drehen des Satelliten um die Satellitendrehachse während des Drehens des Rundtisches um die Schaltachse ermöglicht. Bei dieser Ausführungsform der Erfindung weist der Satellit vorzugsweise eine durch den Rundtisch hindurch führende, bezüglich des Rundtisches um die Satellitendrehachse drehbare, drehfest mit dem Satelliten verbundene Welle auf, an deren zur Basiseinheit zugewandter Stirnseite eine Hirth-Verzahnung angeordnet ist. An der Basiseinheit ist eine Idexiervorrichtung angeordnet mit einer parallel zu Schaltachse linear verschiebbaren Säule oder Ringscheibe, an deren zum Rundtisch zugewandten Stirnseite eine der Hirthverzahnung an der Satellitenwelle entsprechende Hirth-Verzahnung angeordnet ist. Die Anordnung ist derart, dass zum Indexieren des Satelliten die Hirth-Verzahnung der Indexiervorrichtung linear in Richtung des Rundtisches verschiebbar ist, um in die Hirth-Verzahnung des Satelliten einzugreifen und dadurch die Indexierung des Satelliten zu bewirken. Zum Lösen der Indexierung ist die Hirthverzahnung der Indexiervorrichtung wiederum linear vom Rundtisch weg verschiebbar.

Gemäss einer weiteren bevorzugten Ausführungsform der Erfindung weist die Rundtaktmaschine eine ortsfesten Basiseinheit auf und einen bezüglich der Basiseinheit um eine vertikale Schaltachse drehbaren Rundtisch. Weiter umfasst die Rundtaktmaschine Antriebsmittel zum Antreiben des Rundtisches, wobei die Antriebsmittel eine direktangetriebene Rundachse umfassen, deren Stator fest mit der Basiseinheit und deren Rotor fest mit dem Rundtisch verbunden sind. Die Rundtaktmaschine gemäss dieser Ausführungsform der Erfindung umfasst weiter vorzugsweise eine Messvorrichtung zum exakten Messen der Position und der Geschwindigkeit des Rotors bezüglich des Stators und eine einen Kaskadenregler mit Rückführung der Geschwindigkeit und der Position umfassende Schaltungsanordnung zur Steuerung bzw. Regelung der direktangetriebenen Rundachse. Ein Verfahren zur Konstruktion einer Rundtaktmaschine gemäss dieser Ausführungsform der Erfindung kann einen auf der Methode der harmonischen Linearisierung basierenden Schritt zur Optimierung der Systemparameter der direktangetriebenen Rundachse und der Schaltungsanordnung zur Steuerung bzw. Regelung der direktangetriebenen Rundachse umfassen.

Gemäss einer alternativen Ausführungsform der Erfindung umfassen die Antriebsmittel zum Antreiben des Rundtisches einen konventionellen Rundtischmotor.

Eine erfindungsgemässe Rundtaktmaschine weist vorzugsweise einen ortsfesten Sockel und einen bezüglich des Sockels um eine vertikale Schaltachse drehbaren Rundtisch auf, wobei der Sockel zum Sammeln von Spänen, Kühlmitteln und/oder Schmiermitteln trichterförmig ausgebildet ist und zu seinem Zentrum bei der Schaltachse hin nach unten geneigte Oberflächen hat. Vorzugsweise weist der trichterförmige Sockel der Rundtaktmaschine gemäss dieser Ausführungsform der Erfindung für die Abfuhr von Spänen einen auf ein Span-Förderband mündenden Tricherauslass auf.

Die nachfolgende detaillierte Beschreibung der vorliegenden Erfindung dient in Verbindung mit den beiliegenden Zeichnungen nur als Beispiel für ein besseres Verständnis der Erfindung und ist nicht als Einschränkung des Schutzbereichs der Patentansprüche aufzufassen. Für den Fachmann sind aus der nachfolgenden Beschreibung in Verbindung mit den beiliegenden Zeichnungen und der Gesamtheit der Patentansprüche weitere vorteilhafte Ausführungsformen und Merkmalskombinationen ohne weiteres erkennbar, die jedoch immer noch innerhalb des Bereichs der vorliegenden Erfindung liegen.

### Kurze Beschreibung der Zeichnungen

Die Zeichnungen stellen eine bevorzugte Ausführungsform der vorliegenden Erfindung dar. Es zeigen:
- Fig. 1: eine perspektivische Ansicht einer Rundtaktmaschine gemäss einer bevorzugten Ausführungsform der Erfindung ohne Gehäuse;
- Fig. 2: eine Teilansicht der Rundtaktmaschine aus Fig. 1 in einer teilweise geschnittenen perspektivischen Darstellung;
- Fig. 3.a: eine Teilansicht in einer teilweise geschnittenen perspektivischen Darstellung eines Satelliten für die Rundtaktmaschine aus Fig. 1;

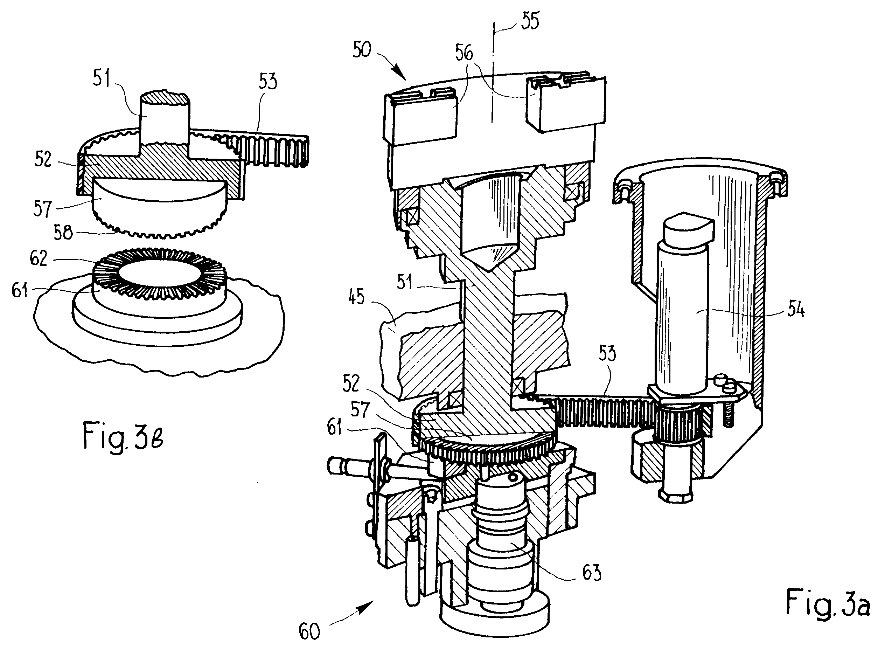

- Fig. 3.b: Detailansicht von Hirthverzahnung aus Fig. 3.a;

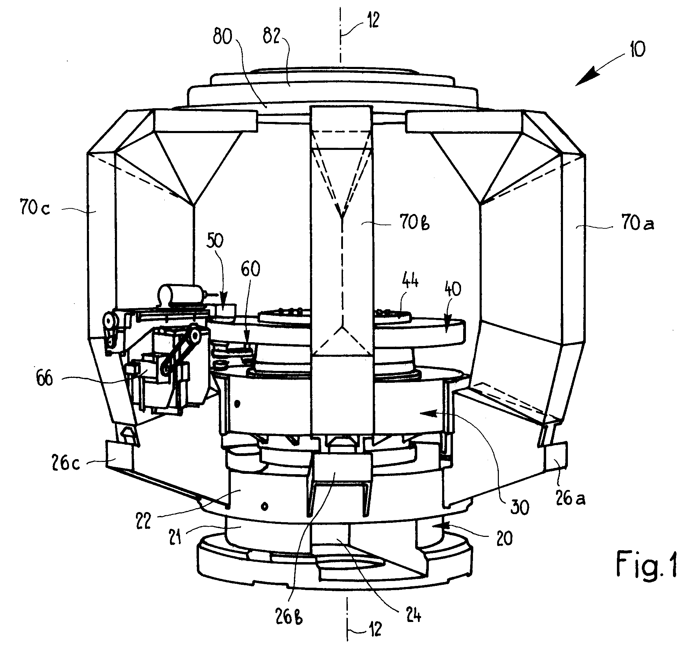

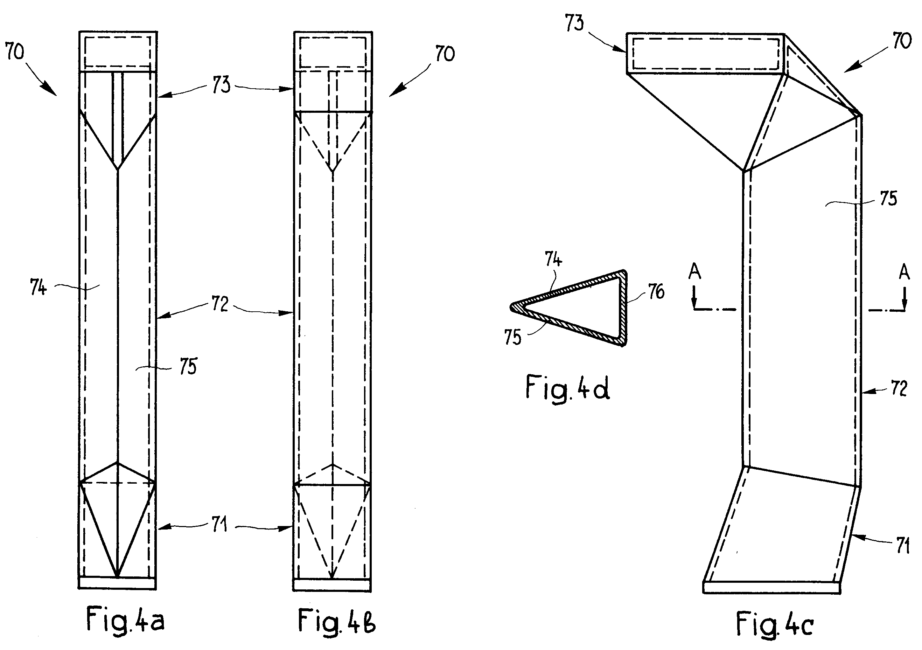

- Fig. 4.a: Stütze für Rundtaktmaschine aus Fig. 1 in einer Draufsicht von vorne;
- Fig. 4.b: Stütze aus Fig. 4.a in einer Draufsicht von hinten;
- Fig. 4.c: Stütze aus Fig. 4.a in einer Seitenansicht;
- Fig. 4.d: Querschnitt durch Stütze entlang der Linie A-A in Fig. 4.c;

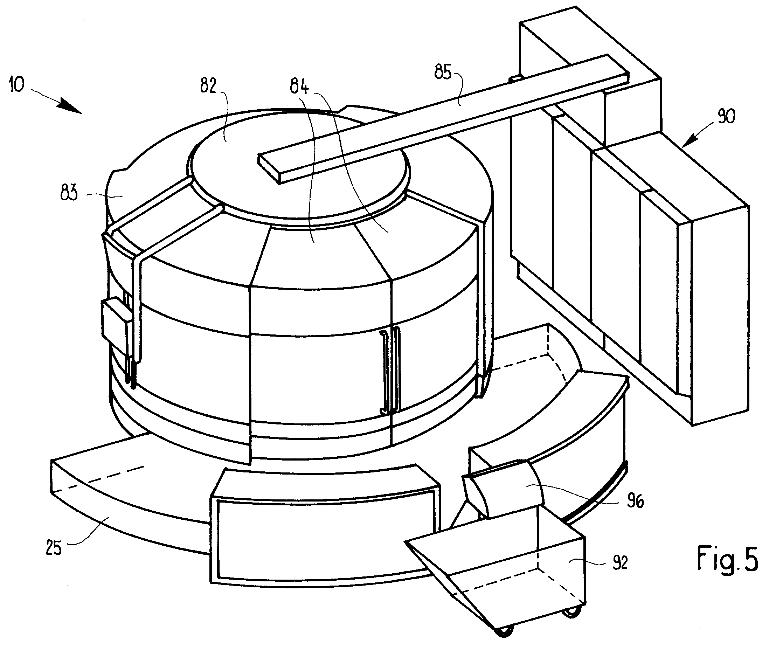

- Fig. 5: eine perspektivische Ansicht der Rundtaktmaschine aus Fig. 1 mit geschlossenem Maschinengehäuse.

Grundsätzlich sind in den Figuren gleiche Teile mit gleichen Bezugszeichen versehen.

### Wege zur Ausführung der Erfindung

In den Figuren ist eine Rundtaktmaschine 10 gemäss einer bevorzugten Ausführungsart der vorliegenden Erfindung dargestellt.

Die in den Figuren dargestellte Rundtaktmaschine 10 weist einen Sockel 20 auf, der in für Werkzeugmaschinen üblicher Art auf einem soliden Fundament 25 angeordnet ist. Der Sockel 20 ist aus Polymerbeton (auch Mineralguss genannt) gefertigt und dient als stabiler Aufnahmesockel für die Rundtaktmaschine 10.

Der Sockel 20 weist einen unteren Abschnitt 21 mit im wesentlichen kreisrundem Querschnitt auf. Durch den unteren Sockelabschnitt 21 hindurch ist eine entlang eines Durchmessers durch das Zentrum hindurch führende, durchgehende horizontale Durchführung 24 für das nachfolgend beschriebene Span-Förderband 96 ausgebildet.

Der mittlere, über der horizontalen Durchführung 24 für das Span-Förderband 96 angeordnete Sockelabschnitt 22, weist eine trichterförmig (oder schalenförmig) ausgebildete Partie auf mit zu seinem Zentrum hin nach unten geneigten Oberflächen 27. Dieser mittlere Sockelelabschnitt 22 dient dem Sammeln von Spänen, Kühlmitteln und/oder Schmiermitteln. Die flüssigen Kühlmittel und/oder Schmiermittel werden durch den Sockel 20 (im folgenden auch Trichtersockel genannt) gesammelt und vorzugsweise über eine Ringleitung und/oder andere geeignete Leitungen (nicht dargestellt) zur Wiederverwendung in eine Zwischenspeichervorrichtung oder in die entsprechenden Zuführungsleitungen der Rundtaktmaschine 10 zurückgeführt.

In seinem Zentrum weist der mittlere Abschnitt 22 des Trichtersockels 20 einen nach unten, in die oben erwähnte horizontale Durchführung 24 führenden Trichterauslass 28 auf, der bei der dargestellten Rundtaktmaschine 10 auf ein Span-Förderband mündet. Die Späne werden durch den Trichtersockel 20 gesammelt, zur Mitte geleitet und durch den Trichterauslass 28 hindurch auf das Span-Förderband 96 abgeführt, welches die Späne weiter von der Rundtaktmaschine 10 weg, z.B. in einen fahrbaren Transportbehälter 92, befördert. Der ganze Späneraum der Rundtaktmaschine 10 ist unten frei und sein Boden wird durch die zum Trichterauslass 28 in der Mitte hin geneigten Oberflächen 27 der trichterförmigen Sockelpartie 22 gebildet, wodurch vermieden wird, dass sich die Späne derart auf Maschinenteilen ansetzen, dass sie die Funktion der Rundtaktmaschine 10 behindern. Die erwähnte Gestaltung des Trichtersockels 20 erlaubt es, ein Span-Förderband 96 in Richtung eines Durchmessers durch das Zentrum bezüglich des Maschinenquerschnittes hindurch zu führen. Da das Förderband 96 im untersten Bereich der Rundtaktmaschine 10 angeordnet ist, stört es deren Funktionen nicht.

Zur Verlängerung des Trichters 22 in radialer Richtung sind am Umfang des mittleren Sockelabschnitts 22 Befestigungsträger 26a, 26b, 26c angeordnet, die nach aussen hin ansteigen. An diesen Trägern 26a, 26b, 26c können Auffangtafeln (in der Verlängerung der Trichteroberfläche in radialer Richtung nach aussen) befestigt werden, um Späne, Kühlmitteln und/oder Schmiermittel aufzufangen und zum Trichterauslass 28 zu führen, die sonst ausserhalb des Trichtersockels 20 hinunterfallen würden. Bei der in den Figuren dargestellten Rundtaktmaschine 10 sind diese Auffangtafeln aus Stahlbelch gefertigt und die Befestigungstrager 26a, 26b, 26c für die Auffangtafeln sind als integraler Bestandteil der weiter hinten beschriebenen Stützen 70a, 70b, 70c ausgebildet.

Der obere Sockelabschnitt 23 hat die Form eines hohlzylindrischen Stumpfes und dient der Aufnahme der nachfolgend beschriebenen Maschinenbasis 30.

Der Sockel 20 der erfindungsgemässen Rundtaktmaschine 10 hat somit zwei Funktionen: erstens dient er als stabiler Aufnahmesockel für die Rundtaktmaschine 10, und zweitens dient er dem Sammeln von Spänen, Kühlmitteln und/oder Schmiermitteln.

Auf dem Sockel 20 der Rundtaktmaschine 10 ist die sogenannte Basiseinheit 30 (auch Bâti genannt) angeordnet. Die Basiseinheit 30 hat einen hohlzylinderförmigen unteren Abschnitt 31, dessen Innendurchmesser ein wenig grösser ist als der Aussendurchmesser des oben erwähnten hohlzylindrischen Stumpfes des oberen Sockelabschnittes 23. Der untere Abschnitt 31 der Basiseinheit 30 dient zur Schaffung einer festen Verbindung mit dem Sockel 20. Bei der Montage der Maschine 10 wird die Basiseinheit 30 derart auf den Trichtersockel 20 gesetzt, dass sie mit ihrem hohlzylindrischen unteren Abschnitt 31 den obersten, zylinderstumpfförmigen Sockelabschnitt 23 nach Art einer Überwurfmanschette umfasst. Anschliessend wird die Basiseinheit 30 bezüglich ihrer Horizontallage justiert. Danach wird die Basiseinheit 30 mit Polymerbeton mit dem Sockel 20 vergossen, um eine feste Verbindung zwischen der Basiseinheit 30 und dem Sockel 20 zu schaffen.

Die Basiseinheit 30 weist weiter einen massiven, ringförmigen mittleren Abschnitt 32 auf, welcher die ortsfesten Teile der weiter hinten beschriebenen Indexiervorrichtungen 60 trägt und an welchen weiter die ebenfalls weiter hinten beschriebenen Stützen 70a, 70b, 70c angeordnet sind. Der mittlere Abschnitt 32 der Basiseinheit 30 hat einen wesentlich grösseren Durchmesser als der untere Abschnitt 31 oder der nachfolgend beschriebene obere Abschnitt 33 der Basiseinheit 30.

Der obere Abschnitt 33 der Basiseinheit 30 hat wiederum die Form eines hohlzylindrischen Stumpfes. Er dient einerseits zur Aufnahme des Hauptantriebsmotors 46 der Rundtaktmaschine 10, welcher den Rundtisch 40 zur Drehung um die Schaltachse 12 der Rundtaktmaschine 10 antreibt, und trägt andrerseits das Hauptlager 41, auf welchem der Rundtisch 40 bezüglich der Basiseinheit 30 um die vertikale Schaltachse 12 drehbar gelagert ist.

Die Basiseinheit 30 dient als Bezugsbasis zur genauen Positionierung sämtlicher Maschinenteile. Die Basiseinheit 30 dient weiter als Träger für das Hauptlager 41 des Rundtisches 40 und als Träger für den Hauptantriebsmotor 46 der Rundtaktmaschine 10.

Bei der in den Figuren dargestellten bevorzugten Ausführungsform der Erfindung ist die Basiseinheit 30 aus Sphäroguss gefertigt. Bei alternativen Ausführungsformen der Erfindung kann die Basiseinheit jedoch auch aus anderen geeigneten Materialien, wie z.B. Grauguss, gefertigt sein.

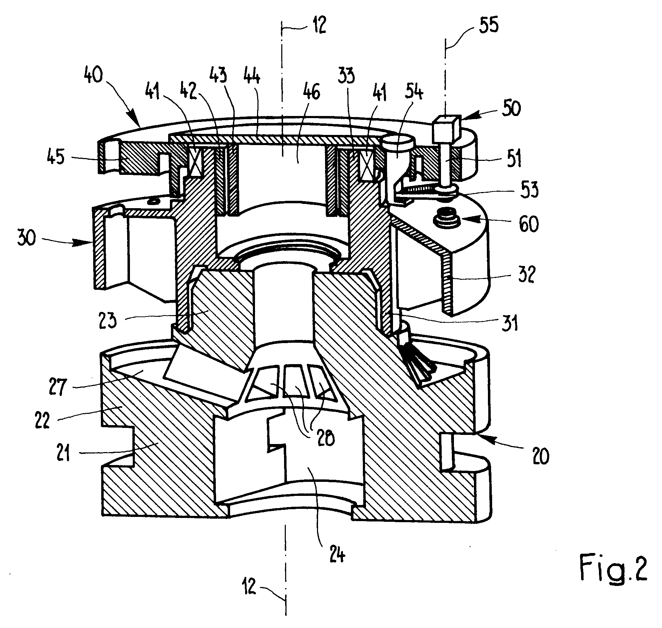

Als Hauptantriebsmotor 46 für die Rundtaktmaschine 10 wird eine direktangetriebene Rundachse 46 (auf englisch "brushless ring torque motor") verwendet, deren Stator 42 fest mit dem oberen Abschnitt 33 der Basiseinheit 30 und deren Rotor 43 fest mit dem Rundtisch 40 verbunden sind. Für die in den Figuren dargestellte Rundtaktmaschine 10 wird eine direktangetriebene Rundachse 46 der Firma ''EAAT, Chemnitz, Deutschland'' verwendet. In der Figur 2 sind der Stator und der Rotor des Hauptantriebsmotors 46 andeutungsweise bei den Bezugszahlen 42 bzw. 43 dargestellt. Der hohlzylinderförmige Stator 42 ist mittels Schrauben oder auf andere geeignete Art fest an der Innenwand des hohlzylindrischen oberen Abschnittes 33 der Basiseinheit 30 angeordnet. Der Rotor 43 des Hauptantriebsmotors 46 ist im Innenraum des Stators 42 angeordnet, ohne diesen zu berühren, und ragt in axialer Richtung nach oben über den Stator 42 hinaus. An seinem oberen Ende ist der Rotor 43 an einer kreisförmigen, deckelähnlichen Verbindungsplatte 44 festgeschraubt, welche den zentralen Teil 44 des Rundtisches 40 bildet. Diese Verbindungsplatte 44 ist ihrerseits mittels Schrauben mit dem ringförmigen äusseren Teil 45 des Rundtisches 40 verbunden.

Zur Lagerung des Rundtisches 40 auf der Basiseinheit 30 trägt der obere Abschnitt 33 der Basiseinheit 30 ein sogenanntes Axial-Radiallager 41, wie es beispielsweise von der Firma INA vertrieben wird. Auf diesem Hauptlager 41 ist der Rundtisch 40 drehbar gelagert.

Der Rundtisch 40, das Hauptlager 41 und der Motor 46 weisen eine mehrteilige, demontierbare Struktur auf. Dadurch kann nötigenfalls der Rundtisch 40, das Lager 41 und/oder der Motor 46 demontiert und nach oben aus der Rundtaktmaschine 10 ausgebaut werden, ohne dass dazu gleichzeitig auch die hydraulischen und/oder elektrischen Anschlüsse zu den weiter hinten beschriebenen Satelliten 50 unterbrochen und später wieder neu angeschlossen werden müssen.

Der Hauptantriebsmotor 46 ist mit einer Messvorrichtung zum exakten Messen der Position und der Geschwindigkeit des Rotors 43 bezüglich des Stators 42 (bzw. der Basiseinheit 30) versehen. Die Geschwindigkeit des Motors 46 kann entweder direkt gemessen oder bei einer alternativen Ausführungsform der Messvorrichtung aus mehrfachen Positionsmessungen indirekt bestimmt werden. Die Messsignale der Messvorrichtung werden zur Steuerung bzw. Regelung des Antriebes des Hauptantriebesmotors 46 (der wie oben erwähnt die Form einer direktangetriebenen Rundachse 46 hat) verwendet. Die Schaltungsanordnung zur Steuerung bzw. Regelung des Hauptantriebsmotors 46 umfasst einen Kaskadenregler mit Rückführung der Geschwindigkeit und der Position. Mit Hilfe der Methode der harmonischen Linearisierung (auf englisch ''harmonic balance method'') wurden die Systemparameter des Reglers und des Hauptantriebsmotors 46 in der Entwurfphase in Bezug auf die Regelgüte und die Robustheit optimiert.

Bei der in den Figuren dargestellten Rundtaktmaschine 10 wird mit Hilfe der gemäss dem beschriebenen Verfahren optimierten Einrichtung aus direktangetriebener Rundachse 46 und zugehöriger Regelungsschaltungsanordnung eine sehr hohe Positioniergeschwindigkeit bei einer gleichzeitig derart hohen Laststeifigkeit erreicht, dass kein Festklemmen des Rundtisches 40 in seinen jeweiligen Arbeitspositionen mehr erforderlich ist. Dadurch wird bei der erfindungsgemässen Rundtaktmaschine 10 ein äusserst schneller und hochdynamischer Antrieb des Rundtisches 40 und somit im Vergleich zu herkömmlichen Rundtaktmaschinen eine beträchtliche Effizienzsteigerung erreicht.

Die Werkstückaufnahmevorrichtungen oder Satelliten 50 sind auf dem Rundtisch 40 jeweils um eine vertikale Satellitendrehachse 55 bezüglich des Rundtisches 40 drehbar gelagert. Jeder Satellit 50 ist mit mindestens einer Spannvorrichtung 56 zum Aufspannen eines Werkstückes versehen. Um ein Drehen der Satelliten 50 (und damit der Werkstücke) um ihre Satellitendrehachsen 55 während des Drehens bzw. Schaltens des Rundtisches 40 von einer Arbeitsposition in seine nächste Arbeitsposition zu ermöglichen, ist jeder Satellit 50 mit einer Satellitenantriebsvorrichtung 52, 53, 54 versehen, die am Rundtisch 40 angeordnet und mit diesem um die Schaltachse 12 herum mitbewegt wird. Die Satellitenantriebsvorrichtungen 52, 53, 54 dienen der Grobpositionierung der Satelliten 50 (und somit der Werkstücke) in Bezug auf die Drehbewegungen um ihre Satellitendrehachse 55 herum, wobei diese Grobpositionierung während des Drehens des Rundtisches 40 um die Schaltachse 12 herum ausgeführt werden kann. Die Feinpositionierung der Satelliten 50 (und der Werkstücke) wird mit der weiter hinten beschriebenen Indexiervorrichtung 60 ausgeführt, wenn der Rundtisch 40 in einer Arbeitsposition ruht.

In den Figuren ist der Übersichtlichkeit halber bloss ein einziger Satellit 50 dargestellt. In Wirklichkeit sind bei der in den Figuren dargestellten Rundtaktmaschine 10 acht Satelliten 50 auf dem Rundtisch 40 angeordnet. Es versteht sich von selbst, dass bei anderen Ausführungsarten der Erfindung ebensogut eine grössere oder eine kleinere Anzahl von Satelliten auf dem Rundtisch angeordnet sein können.

Die Satellitenantriebsvorrichtung 52, 53, 54 umfasst einen am Rundtisch 40 angebrachten, vorzugsweise elektrisch betätigbaren Motor 54 (nachfolgend als Satellitenmotor 54 bezeichnet), der über einen Zahnriemen-Ritzel-Antrieb den eigentlichen Satelliten 50 antreibt. Der Satellit 50 weist eine bezüglich des Rundtisches 40 um die Satellitendrehachse 55 drehbare Satellitenwelle 51 auf, an welcher ein Antriebsritzel 52 drehfest angebracht ist. Das Antriebsritzel 52 (und somit die Satellitenwelle 51) ist über den Zahnriemen 53 durch den Satellitenmotor 54 zur Drehung um die Satellitendrehachse 55 antreibbar. Die Satellitenwelle 51 ist in einer durch den Rundtisch 40 hindurch führenden Bohrung angeordnet und bezüglich des Rundtisches 40 drehbar gelagert. Bei der in den Figuren dargestellten Ausführungsform der Erfindung sind der Zahnriemen 53 und das Antriebsritzel 52 unterhalb des Rundtisches 40 angeordnet. In anderen Ausführungsformen können Zahnriemen und Antriebsritzel des Satelliten auch oberhalb des Rundtisches angeordnet sein.

An seinem axial unteren Ende ist an der Satellitenwelle 51 eine fest mit der Satellitenwelle 51 verbundene Ringscheibe 57 angeordnet (anstelle einer Ringscheibe 57 kann bei anderen Ausführungsformen der Erfindung auch eine Säule o.ä. verwendet werden). Die Ringscheibe 57 ist bei dem in den Figuren dargestellten Ausführungsbeispiel der Erfindung direkt unterhalb des Antriebsritzels 52 der Satellitenwelle 51 angeordnet. Die Ringscheibe 57 kann mittels Schrauben, Schweissen o.ä. an der Welle 51 befestigt sein, oder sie kann als integraler Teil der Welle 51 ausgebildet sein. Die Unterseite der Ringscheibe 57 bildet im wesentlichen die untere Stirnseite des Satelliten 50 bzw. der Satellitenwelle 51. Diese Scheibenunterseite ist mit einer Plan-Kerbverzahnung 58 mit radialen Zähnen nach Art einer Hirth-Verzahnung 58 versehen, um mit einer entsprechenden Hirth-Verzahnung 62 auf der Oberseite einer Scheibe 61 oder Säule der weiter hinten beschriebenen Indexiervorrichtung 60 zusammenzuwirken.

Am axial gegenüberliegenden, oberen Ende der Satellitenwelle ist eine Spannvorrichtung zum Aufspannen eines oder mehrerer Werkstücke fest an der Satellitenwelle angeordnet. Aufgrund der festen Verbindung zwischen der Welle (bzw. dem Satelliten) und dem Werkstück kann die Positionierung des Werkstückes über die Positionierung des Satelliten erfolgen.

Zum Indexieren (d.h. Feinpositionieren und Fixieren) der Satelliten 50 ist jeder Bearbeitungsstation der Rundtaktmaschine 10 eine Indexiervorrichtung 60 zugeordnet, die am mittleren Abschnitt 32 der Basiseinheit 30, unterhalb des Rundtisches 40, angeordnet ist.

Die Indexiervorrichtung 60 umfasst eine in vertikaler Richtung (d.h. parallel zur Schaltachse der Rundtaktmaschine 10) verschiebliche Ringscheibe 61, deren Oberseite mit einer Hirthverzahnung 62 versehen ist (anstelle einer Ringscheibe 61 kann bei anderen Ausführungsformen der Erfindung auch eine Säule o.ä. verwendet werden). Die Ringscheibe 61 ist mittels einer hydraulischen Kolbenvorrichtung 63 in vertikaler Richtung linear verschiebbar. Die Hirthverzahnung 62 an der Oberseite der Ringscheibe 61 der Indexiervorrichtung 60 ist zur Hirthversahnung 58 an der Unterseite der Ringscheibe 57 der Satellitenwelle 51 passend ausgebildet, um mit dieser zusammen nach Art einer Hirth-Kupplung zusammenzuwirken.

Die Ringscheibe 61 der Indexiervorrichtung 60 ist beim Betrieb der Rundtaktmaschine 10 bezüglich der Basiseinheit 30 bloss linear in vertikaler Richtung verschiebbar, jedoch nicht drehbar angeordnet. Jegliche Drehbewegungen der Ringscheibe 61 der Indexiervorrichtung 60 sind beim Betrieb der Rundtaktmaschine 10 durch eine Drehblockiervorrichtung blockiert.

Bei der in den Figuren dargestellten Ausführungsform der Erfindung ist die Ringscheibe 61 der Indexiervorrichtung 60 direkt auf einem Kolben angeordnet, der in der Basiseinheit 30 in vertikaler Richtung beweglich geführt ist. Bei der Einstellung der Rundtaktmaschine 10 zur Bearbeitung eines neuen Werkstückes kann die Drehblockiervorrichtung des Kolbens (und somit der Ringscheibe 61) gelöst und die Ringscheibe 61 um ihre vertikale Verschiebungsachse gedreht werden. Die Drehlage der Ringscheibe 61 der Indexiervorrichtung 60 wird bei der Einstellung der Maschine 10 äusserst genau, z.B. mit einer Toleranz von 0.01 Grad, eingestellt und anschliessend mittels der Drehblockiervorrichtung blockiert.

Während des Betriebs der Rundtaktmaschine 10 erfolgt die Positionierung des Satelliten 50 (und somit des Werkstückes) in zwei Schritten. In einem ersten Schritt, der während des Drehens des Rundtisches 40 um die Schaltachse 12 ausgeführt werden kann, wird der Satellit 50 mittels der Satellitenantriebsvorrichtung 52, 53, 54 bezüglich des Rundtisches 40 um seine vertikale Satellitendrehachse 55 in die für die nächste Bearbeitungsstation gewünschte Position gedreht. Sobald der Satellit 50 an der nächsten Bearbeitungsstation über der dieser Bearbeitungsstation zugeordneten Indexiervorrichtung 60 angekommen ist und der Rundtisch 40 in seiner Arbeitsposition ruht, wird in einem zweiten Schritt die Ringscheibe 61 der Indexiervorrichtung 60 mittels der Kolbenvorrichtung vertikal nach oben verschoben, damit ihre Hirth-Verzahnung 62 in die Hirthverzahnung 58 der Ringscheibe 57 an der Satellitenwelle 51 eingreift. Dabei wird die Satellitenwelle 51 ein wenig um die Satellitendrehachse 55 gedreht und somit die Feinpositionierung der Satellitenwelle 51 und somit des Werkstückes auf dem Satellit 50 ausgeführt, bis die beiden Verzahnungen 58, 62 vollständig ineinander passen. Durch das Ineinandergreifen der beiden Verzahnungen 58, 62 wird der Satellit gleichzeitig in seiner Position fixiert. Nach dem Ende des Bearbeitungsvorgangs an der Bearbeitungsstation wird die Ringscheibe 61 der Indexiervorrichtung 60 wieder nach unten, vom Rundtisch 40 weg, verschoben, worauf der Rundtisch 40 in seine nächste Arbeitsposition geschaltet werden kann.

Die einzuhaltende Toleranz für die Grobpositionierung des Satelliten 50 im ersten Schritt ergibt sich aus der Feinheit der Hirth-Verzahnungen 58, 62: die Grobpositionierung muss bloss gewährleisten, dass beim anschliessenden Indexieren die beiden Verzahnungen 58, 62 mit den richtigen Zähnen und Kerben ineinandergreifen. Bei üblichen Hirth-Verzahnungen wird dies gewährleistet, wenn bei der Grobpositionierung eine Toleranz von ein bis zwei Grad eingehalten wird.

Bei der in den Figuren dargestellten Rundtaktmaschine 10 ist jeder Indexier-Kolben über eine separate Hydraulikleitung unabhängig von den anderen Kolben betätigbar. Bei einer anderen Ausführungsform der Erfindung ist es möglich, eine Hydraulik-Ringleitung vorzusehen, über welche sämtliche Kolben der verschiedenen Indexiervorrichtungen synchron betätigt werden können.

Am äusseren Umfang des mittleren Abschnittes 32 der Basiseinheit 30 sind bei der in den Figuren dargestellten Rundtaktmaschine 10 acht Stützen 70 angeordnet (der Übersichtlichkeit halber sind in der Figur 1 bloss deren drei eingezeichnet). Es ist klar, dass die Anzahl der Stützen 70 bei anderen Ausführungsarten der Erfindung von acht verschieden sein kann, je nach dem, wie viele Bearbeitungsstationen für die Rundtaktmaschine 10 gewünscht werden. Die Stützen 70 dienen zur Befestigung der weiter hinten beschriebenen Bearbeitungseinheiten 66.

Bei der in den Figuren dargestellten Ausführungsform der Erfindung sind die Stützen 70 aus ungeglühtem Sphäroguss gefertigt. Zur Herstellung der Stützen 70 können bei alternativen Ausführungsformen der Erfindung jedoch auch andere geeignete Materialien verwendet werden, wie z.B. geglühter Grauguss.

Jede der in den Figuren dargestellten Stützen 70 hat einen mittleren, im wesentlichen vertikal (d.h. parallel zur Schaltachse 12) verlaufenden Abschnitt 72, einen unteren Abschnitt 71 zur Befestigung der Stütze 70 an der Basiseinheit 30 und/oder am Sockel 20 sowie einen oberen Abschnitt 73, der zur Verbindung mit den anderen Stützen 70 ausgebildet ist, um die Steifigkeit und Stabilität des aus den Stützen 70 gebildeten Gestells zu erhöhen. Der obere Abschnitt 73 und der untere Abschnitt 71 der Stützen 70 sind bezüglich des mittleren, vertikal verlaufenden Abschnittes 72 in Richtung der Schaltachse 12 der Rundtaktmaschine 10 hin abgewinkelt, so dass die Stützen 70 im wesentlichen eine C-förmige Gestalt haben. Aus diesem Grund werden die Stützen 70 im folgenden auch als C-Stützen 70 bezeichnet.

Durch die C-förmige Ausbildung der Stützen 70 derart, dass der mittlere Abschnitt 72 der Stützen 70 vom Zentrum der Rundtaktmaschine 10 weg (d.h. aussermittig bezüglich des Rundtisches 40) angeordnet ist, wird das Zentrum der Rundtaktmaschine 10 frei gelassen, so dass dort ausreichend Platz für die Bearbeitung der auf dem Rundtisch 40 angeordneten Werkstücke vorhanden ist. Weiter wird durch die C-förmige Ausgestaltung der Stützen 70 ein einfacher Zugang zum Maschinenzentrum, insbesondere zum Rundtisch 40, den Satelliten 50 und den Indexiervorrichtungen 60 geschaffen, was bei der Einrichtung der Rundtaktmaschine 10 zur Bearbeitung neuer Werkstücke von Vorteil ist.

Die Zugänglichkeit zum Zentrum der Rundtaktmaschine 10 wird weiter dadurch verbessert, dass zumindest der mittlere Abschnitt 72 der Stützen 70 nicht einen üblichen rechteckigen oder kreisförmigen Querschnitt, sondern einen keilförmigem Querschnitt aufweist, der derart angeordnet ist, dass die Keilspitze in radialer Richtung gegen die Schaltachse 12 hin gerichtet ist. Dadurch nehmen die Stützen 70 an ihrem radial inneren Ende (d.h. dort, wo bei der Rundtaktmaschine 10 möglichst viel freier Raum zur Werkstückbearbeitung und/oder zur Einrichtung der Maschine 10 für die Werkstückbearbeitung benötigt wird) weniger Raum ein als an ihrem radial äusseren Ende beim Aussenumfang der Maschine 10, wo genügend Raum vorhanden ist. Bei der in den Figuren dargestellten Ausführungsform der Erfindung haben die Stützen 70 somit insgesamt eine Form, die einem Zitronenschnitz ähnlich sieht.

Bei der in den Figuren dargestellten Ausführungsform der Erfindung weist der unterste Abschnitt 71 der Stützen nicht einen keilförmigen, sondern einen rechteckigen Querschnitt auf (dies erweist sich weder hinsichtlich der Zugänglichkeit noch hinsichtlich der Schaffung von freiem Raum im Zentrum der Rundtaktmaschine 10 als nachteilig, weil im Bereich des untersten Stützenabschnittes 71 keine Werkstückbearbeitung stattfindet und keine Einstellungsarbeiten auszuführen sind). Bei der Montage der Rundtaktmaschine 10 werden die Stützen 70 zunächst an der Basiseinheit 30 angeschraubt, indem mit üblichen Zugschrauben eine feste Schraubenverbindung zwischen dem unteren Stützenabschnitt 71 und dem mittleren Abschnitt 32 der Basiseinheit 30 hergestellt wird. Danach werden die Stützen 70 zusätzlich am Sockel 20 befestigt, indem mit Zug-Druck-Schrauben eine Schraubenverbindung zwischen dem unteren Stützenabschnitt 71 und dem mittleren Sockelabschnitt 22 hergestellt wird. Durch die Verwendung von Zug-Druck-Schrauben zur Befestigung der Stützen 70 am Sockel 20 können allfällige Ungenauigkeiten in der Positionierung der Basiseinheit 30 bezüglich des Sockels 20 ausgeglichen werden, um jegliche Spannungen in den Stützen 70 zu verhindern.

Bei der in den Figuren dargestellten Rundtaktmaschine 10 ist der unterste Teil der C-Stützen 70 gleichzeitig als Befestigungsträger 26a, 26b, 26c für die früher erwähnten Auffangtafeln ausgebildet, um eine Verlängerung des Trichters zum Auffangen der Späne in radialer Richtung nach aussen bereit zu stellen.

Der mittlere Abschnitt 72 der Stützen besteht bei der in den Figuren dargestellten Ausführungsart der Erfindung im wesentlichen aus zwei Seitenwänden 74, 75, die zum Zentrum der Rundtaktmaschine 10 hin spitzwinklig zusammenlaufen, und einer quer zu den Seitenwänden 74, 75 angeordneten, diese verbindenden Rückwand 76 am Aussenumfang des aus den Stützen 70 gebildeten Gestells. Der Querschnitt der Stützen 70 hat somit im wesentlichen die Form eines spitzwinkligen Dreiecks, dessen Spitze zur Schaltachse 12 der Rundtaktmaschine 10 hin gerichtet ist. Bei einer anderen Ausführungsart der Erfindung wird die Rückwand der Stützen weggelassen, so dass die Stütze einen im wesentlichen V-förmigen Querschnitt haben.

Die Seitenwände 74, 75 des mittleren Abschnittes 72 der Stützen 70 sind zur Aufnahme von Bearbeitungseinheiten 66 für die Werkstückbearbeitung ausgebildet (der Übersichtlichkeit halber ist in den Figuren nur eine einzige Bearbeitungseinheit dargestellt). Bei der in den Figuren dargestellten Rundtaktmaschine 10 ist jede Seitenwand 74, 75 einer Stütze 70 mit einer oberen Befestigungsvorrichtung (vorzugsweise in Form von Bohrungen) zur Befestigung einer oberen Bearbeitungseinheit 66 und einer unteren Befestigungsvorrichtung zur Befestigung einer unteren Bearbeitungseinheit 66 versehen. Dadurch können an jeder Stütze 70 vier Bearbeitungseinheiten 66 angeordnet werden, nämlich oben auf beiden Seiten je eine und unten auf beiden Seiten je eine. Jede der acht Stützen 70 definiert eine Bearbeitungsstation der Rundtaktmaschine 10, so dass die in den Figuren dargestellte Rundtaktmaschine 10 mit insgesamt 32 Bearbeitungseinheiten 66 ausgerüstet werden kann.

Bei einer bevorzugten Ausführungsform der Erfindung werden die Versorgungsleitungen und/oder die Steuerleitungen zu den Bearbeitungseinheiten durch den Innenraum der Stützen 70 zu den Bearbeitungseinheiten 66 geführt. Dadurch wird die Zugänglichkeit zum Rundtisch 40 und zu den Indexiervorrichtungen 60 weiter verbessert. Die Versorgungsleitungen dienen der Zufuhr von elektrischer Energie, Kühlmittel und/oder Hydrauliköl zu den Bearbeitungseinheiten 66. Bei einer anderen Ausführungsform der Erfindung werden diese Versorgungsleitungen und/oder die Steuerleitungen auf übliche Art, an den Stützen 70 vorbei direkt zu den Bearbeitungseinheiten 66 geführt.

Bei der dargestellten Rundtaktmaschine 10 kann jedoch auch eine der acht Stützen 70 weggelassen werden, um genügend Platz für den Werkstücktransfer zur Zuführung der unbearbeiteten Werkstücke und/oder den Abtransport der bearbeiteten Werkstücke zu schaffen.

Bei der in den Figuren dargestellten Rundtaktmaschine 10 werden vorzugsweise universell verwendbare, multifunktionale Bearbeitungseinheiten 66 an den Stützen 70 angeordnet. Vorzugsweise kann jede Bearbeitungseinheit 66 wahlweise horizontal oder vertikal an der Stütze 70 angeordnet werden, um die universelle Verwendbarkeit der Bearbeitungseinheiten 66 und somit der Rundtaktmaschine 10 insgesamt zu verbessern. Dadurch lässt sich die ganze Maschine 10 im wesentlichen mit einem als Standardeinheit bezeichneten Typ von Bearbeitungseinheiten 66 ausrüsten. Im Vergleich zu herkömmlichen Rundtaktmaschinen, wo für jede Bearbeitungsstation spezialisierte Bearbeitungseinheiten eingesetzt werden, ergibt sich dadurch bei der erfindungsgemässen Rundtaktmaschine 10 ein erheblicher Kostenvorteil hinsichtlich der Anschaffung und Wartung der Bearbeitungseinheiten 66. Die in den Figuren dargestellte Bearbeitungseinheit 66 ist mit drei linearen Verschiebungsachsen und einer (horizontalen) Rotationsachse versehen. In Verbindung mit der vertikalen Satellitendrehachse 55 wird dadurch eine 5-Achs-Bearbeitung zwischen dem an der Bearbeitungseinheit angeordneten Werkzeug und dem auf dem Satelliten 50 angeordneten Werkstück ermöglicht. Bei anderen Ausführungsformen der Erfindung sind auch Bearbeitungseinheiten mit mehr oder weniger als drei Achsen möglich.

Bei einer alternativen Ausführungsform der Erfindung ist an einer der Stützen, vorzugsweise an einer der oberen Befestigungsvorrichtungen, anstelle einer gewöhnlichen, multifunktionalen Bearbeitungseinheit eine sogenannte Zentrumseinheit befestigt werden, welche die Werkstückbearbeitung vom Zentrum des Rundtisches aus ermöglicht. Die Zentrumseinheit kann beispielsweise eine Bohrspindel aufweisen, um das Bohren von Löchern in das Werkstück in Richtung vom Zentrum radial nach aussen zu ermöglichen.

Der oberer Abschnitt 73 der Stützen 70 umfasst einen im wesentlichen horizontal angeordneten, vom mittleren Stützenabschnitt aus radial nach innen in Richtung Zentrum der Rundtaktmaschine 10 verlaufenden kastenförmigen Arm mit einem rechteckigen Querschnitt. Aus Stabilitätsgründen können im Winkel zwischen dem oberen Stützenabschnitt 73 und dem mittleren Stützenabschnitt 72 Versteifungsrippen und/oder Bleche angeordnet sein. Das radial innere Ende des oberen Stützenabschnittes 73 ist zur Verbindung mit einem Stabilisationsring 80 ausgebildet.

Zur Erhöhung der Steifigkeit und Stabilität des aus den Stützen 70 gebildeten Gestells sind die oberen Stützenabschnitte 73 an ihrem radial inneren Ende mittels eines Stabilisationsringes 80 miteinander Verbunden. Die Verbindung zwischen dem Stabilisationsring 80 und den Stützen 70 wird bei der in den Figuren dargestellten Ausführungsform der Erfindung mittels Schraubenbolzen und -Muttern hergestellt, um die Entstehung von jeglichen Spannungen in den Stützen 70 zu verhindern. Bei alternativen Ausführungsformen der Erfindung können auch andere Verbindungsarten, wie z.B. Schweissen, angewendet werden. Die durch den Stabilisationsring 80 miteinander verbundenen Stützen 70 bilden insgesamt ein kuppelförmiges Gestell, das sich durch eine hohe Steifigkeit und Stabilität auszeichnet.

Auf dem Stabilisationsring 80 ist weiter eine pilzförmige Haube 82 angeordnet, welche die Maschine 10 oben abdeckt. Die Haube 82 dient gleichzeitig als Führung der Türen 84 eines Maschinengehäuses 83, welches die Maschine 10 seitlich und z.T. auch oben abdeckt.

Die zur Versorgung der Rundtaktmaschine 10 mit Hydrauliköl und/oder Kühlmittel erforderlichen Pumpen und die Schaltungsanordnungen zur Steuerung der Maschine 10 sind vorzugsweise ausserhalb des Maschinengehäuses 83, in einem separaten Gehäuse 90 angeordnet. Die Zufuhrleitungen für Strom, Hydrauliköl und Kühlmittel wahlweise dem Boden entlang zum Sockel 20 der Maschine 10 geführt werden und/oder über eine in der Höhe angeordnete Leitungsanordnung 85 zur Abdeckhaube 82 geführt werden. Vorzugsweise werden insbesondere die Steuer- und Versorgungsleitungen zu den Satelliten 50 von oben, von der Abdeckhaube 82 her zu den Satelliten 50 geführt.

Insgesamt wird durch die Erfindung eine Rundtaktmaschine 10 bereitgestellt, die ein Gestell zur Befestigung der Bearbeitungseinheiten 66 aufweist, das sich durch eine hohe Steifigkeit und Stabilität auszeichnet, wobei gleichzeitig im Bereich des Rundtisches 40 ein grosser Freiraum für die Bearbeitung von Werkstücken geschaffen wird und für die Einstellung bzw. Einrichtung der Maschine 10 eine gute Zugänglichkeit zu den Satelliten 50, den Indexiervorrichtungen 60 und zum Rundtisch 40 gewährleistet wird. Weiter weist die erfindungsgemässe Rundtaktmaschine 10 einen äusserst schnellen und hochdynamischen Antrieb für den Rundtisch 40 auf und erlaubt eine zeitsparende und trotzdem genaue Indexierung der Satelliten 50.

## Patentansprüche

1. Rundtaktmaschine (10) mit einem ortsfesten Maschinengestell, an welchem eine Bearbeitungseinheit (66) angeordnet ist und das wenigstens eine Stütze (70) umfasst, und einem bezüglich des Maschinengestells um eine vertikale Schaltachse (12) drehbaren Rundtisch (40), dadurch gekennzeichnet, dass zur Schaffung von Freiraum für die Bearbeitung eines auf dem Rundtisch (40) anzuordnenden Werkstückes mit der Bearbeitungseinheit (66) die Stütze (70) einen sich im wesentlichen vertikal erstreckenden Abschnitt (72) mit keilförmigem Querschnitt derart aufweist, dass die Keilspitze in radialer Richtung gegen die Schaltachse (12) hin gerichtet ist.

2. Rundtaktmaschine (10) nach Anspruch 1, dadurch gekennzeichnet, dass die Keilspitze einen Winkel einschliesst, der kleiner ist als ungefähr 45 Grad.

3. Rundtaktmaschine (10) nach Anspruch 1 oder 2, dadurch gekennzeichnet, dass die Bearbeitungseinheit (66) am sich im wesentlichen vertikal erstreckenden Stützenabschnitt (72) mit keilförmigem Querschnitt angeordnet ist.

4. Rundtaktmaschine (10) nach einem der Ansprüche 1 bis 3, dadurch gekennzeichnet, dass die Stütze (70) am unteren Ende des sich vertikal erstreckenden Abschnittes (72) einen unteren Stützenabschnitt (71) zur Befestigung der Stütze (70) an einem ortsfesten Sockel (20) der Maschine (10) und/oder an einer ortsfesten Basiseinheit (30) der Maschine (10) aufweist, wobei der untere Stützenabschnitt (71) bezüglich des sich vertikal erstreckenden Stützenabschnittes (72) in Richtung der Schaltachse (12) der Rundtaktmaschine (10) hin abgewinkelt ist, so dass die Stütze (70) insgesamt eine im wesentlichen L-förmige Gestalt hat.

5. Rundtaktmaschine (10) nach Anspruch 4, dadurch gekennzeichnet, dass die Stütze (70) am oberen Ende des sich vertikal erstreckenden Abschnittes (72) einen oberen Stützenabschnitt (73) aufweist, der zur Verbindung mit den anderen Stützen (70) der Rundtaktmaschine (10) ausgebildet ist, wobei der obere Stützenabschnitt (73) bezüglich des sich vertikal erstreckenden Stützenabschnittes (72) in Richtung der Schaltachse (12) der Rundtaktmaschine (10) hin abgewinkelt ist, so dass die Stütze (70) insgesamt eine im wesentlichen C-förmige Gestalt hat.

6. Rundtaktmaschine (10) nach Anspruch 5, dadurch gekennzeichnet, dass sie eine ringförmige Verbindungseinrichtung (80) umfasst, welche mit dem oberen Stützenabschnitt (73) von jeder der Stützen (70) fest verbunden ist, um die Stabilität und die Steifigkeit des aus den Stützen (70) gebildeten Gestells zu erhöhen.

7. Rundtaktmaschine (10), insbesondere nach einem der Ansprüche 1 bis 6, mit einer ortsfesten Basiseinheit (30) und einem bezüglich der Basiseinheit (30) um eine vertikale Schaltachse (12) drehbaren Rundtisch (40), auf welchem ein mit mindestens einer Spannvorrichtung (56) zum Aufspannen eines Werkstückes versehener Satellit (50) um eine vertikale Satellitendrehachse (55) bezüglich des Rundtisches (40) drehbar angeordnet ist, gekennzeichnet durch eine am Rundtisch (40) angeordnete und mit diesem mitbewegte Satellitenantriebsvorrichtung (52, 53, 54), welche ein Drehen des Satelliten (50) um die Satellitendrehachse (55) während des Drehens des Rundtisches (40) um die Schaltachse (12) ermöglicht.

8. Rundtaktmaschine (10) nach Anspruch 7, dadurch gekennzeichnet, dass der Satellit (50) eine durch den Rundtisch (40) hindurch führende, bezüglich des Rundtisches (40) um die Satellitendrehachse (55) drehbare, drehfest mit dem Satelliten (50) verbundene Welle (51) aufweist, an deren zur Basiseinheit (30) zugewandter Stirnseite eine Hirth-Verzahnung (58) angeordnet ist, und dass an der Basiseinheit (30) eine Indexiervorrichtung (60) angeordnet ist mit einer parallel zu Schaltachse (12) linear verschiebbaren Säule oder Ringscheibe (61), an deren zum Rundtisch (40) zugewandten Stirnseite eine der Hirthverzahnung (58) an der Satellitenwelle (51) entsprechende Hirth-Verzahnung (62) angeordnet ist, wobei die Anordnung derart ist, dass zum Indexieren des Satelliten (50) die Hirth-Verzahnung (62) der Indexiervorrichtung (60) linear in Richtung des Rundtisches (40) verschiebbar ist, um in die Hirth-Verzahnung (58) des Satelliten (50) einzugreifen und dadurch die Indexierung des Satelliten (50) zu bewirken, und zum Lösen der Indexierung die Hirthverzahnung (62) der Indexiervorrichtung (60) linear vom Rundtisch (40) weg verschiebbar ist.

9. Rundtaktmaschine (10), insbesondere nach einem der Ansprüche 1 bis 8, mit einer ortsfesten Basiseinheit (30) und einem bezüglich der Basiseinheit (30) um eine vertikale Schaltachse (12) drehbaren Rundtisch (40), dadurch gekennzeichnet, dass die Antriebsmittel (46) zum Antrieben des Rundtisches (40) eine direktangetriebene Rundachse (46) umfassen, deren Stator (42) fest mit der Basiseinheit (30) und deren Rotor (43) fest mit dem Rundtisch (40) verbunden sind.

10. Rundtaktmaschine (10) nach Anspruch 9, dadurch gekennzeichnet, dass die Rundtaktmaschine (10) weiter eine Messvorrichtung zum exakten Messen der Position und der Geschwindigkeit des Rotors (43) bezüglich des Stators (42) umfasst und eine einen Kaskadenregler mit Rückführung der Geschwindigkeit und der Position umfassende Schaltungsanordnung zur Steuerung bzw. Regelung der direktangetriebenen Rundachse (46).

11. Verfahren zur Konstruktion einer Rundtaktmaschine (10) nach Anspruch 10, dadurch gekennzeichnet, dass das Verfahren einen auf der Methode der harmonischen Linearisierung basierenden Schritt zur Optimierung der Systemparameter der direktangetriebenen Rundachse (46) und der Schaltungsanordnung zur Steuerung bzw. Regelung der direktangetriebenen Rundachse (46) umfasst.

12. Rundtaktmaschine (10), insbesondere nach einem der Ansprüche 1 bis 10, mit einem ortsfesten Sockel (20) und einem bezüglich des Sockels um eine vertikale Schaltachse (12) drehbaren Rundtisch (40), dadurch gekennzeichnet, dass der Sockel (20) zum Sammeln von Spänen, Kühlmitteln und/oder Schmiermitteln trichterförmig ausgebildet ist und zu seinem Zentrum bei der Schaltachse (12) hin nach unten geneigte Oberflächen (27) aufweist.

13. Rundtaktmaschine (10) nach Anspruch 12, dadurch gekennzeichnet, dass der trichterförmige Sockel (20) für die Abfuhr von Spänen einen auf ein Span-Förderband (96) mündenden Trichterauslass (28) aufweist.
